# EUROPEAN PATENT APPLICATION

(11) **EP 4 425 084 A1**
(43) Date of publication of application: **04.09.2024**
(21) Application number: 23159028.2
(22) Date of filing: 28.02.2023
(51) Int. Cl.: F28F 7/00

(54) **PIPE-IN-GYROID HEAT EXCHANGER**

(71) Applicant: Hyperganic Pte Ltd., Singapur 339949 (SG)
(72) Inventor: Kothari, Akhil, 80799 München (DE)
(74) Representative: 2s-ip Schramm Schneider Bertagnoll Patent- und Rechtsanwälte Part mbB

(57) **Abstract**

The invention relates to a heat exchanger in which the first channel is limited by a wall having a triply periodic minimal surface. The heat exchanger is characterized in that the wall comprises an internal hollow channel which forms the second channel. The heat exchanger is adapted to exchange heat via the wall having the triply periodic minimal surface between a first fluid in the first channel and a second fluid in the second channel.

## Description

### Field of the invention

The present invention relates to heat exchangers in which the voids for the fluids are separated by a wall having a triply periodic minimal surface, in particular a gyroid surface.

### Background of the invention

Heat exchangers for transferring heat from one fluid to be cooled to a cooling fluid are known in prior art.

With the advance of additive manufacturing, new designs for heat exchangers have emerged. Among these designs are heat exchangers based on a gyroid structure. The gyroid structure splits space into two disjoint voids or regions, e.g., a hot region and a cold region, and offers a larger contact area between these disjoint regions than traditional heat exchangers. With the gyroid structure having a repetitive pattern, the gyroid-based heat exchanger may fit efficiently into a predefined space.

In modern heat exchangers the walls defined by the gyroid structure are solid. The hot fluid and the cold fluid are discharged by pipe connections into voids on opposite sides of the walls of the gyroid structure, respectively. This design is limited in that both fluids experience a similar heavy pressure drop and have a reduced contact area depending on the arrangement of the pipe connections. Since both fluids flow through similar-shaped voids, the two fluids cannot be controlled independently. However, from an engineering perspective it may be advantageous to reduce the cooling fluid with respect to the hot fluid and vice versa and/or to select one fluid as a gas and the other fluid as a liquid.

### Object of the invention

It is therefore an object of the present invention to provide a gyroid-based heat exchanger in which the pressure drop for at least one fluid is reduced.

### Solution according to the invention

This object is solved by the heat exchanger according to the independent claim 1. Further developments and advantageous embodiments are specified in the respective dependent claims.

Accordingly, provided is a heat exchanger comprising a first channel and a second channel. The first channel comprises a first pipe connection for receiving a first fluid. The first channel is limited by a wall having a triply periodic minimal surface. The heat exchanger is characterized in that the wall having the triply periodic minimal surface comprises an internal hollow channel. The internal hollow channel comprises a second pipe connection for receiving a second fluid. The internal hollow channel is the second channel, such that the heat exchanger is adapted to exchange heat via the wall having the triply periodic minimal surface between the first fluid in the first channel and the second fluid in the second channel.

The first channel is an internal channel of the heat exchanger and is limited by a wall having a predefined wall thickness, wherein the wall is formed in three-dimensional space along a triply periodic minimal structure without self-intersections. Hence, the surfaces on both sides of the wall are each essentially parallel to the triply periodic minimal surface without self-intersections. Thus, the center of the cross section of the wall is defined by the triply periodic minimal surface in the volume of the heat exchanger. In other words, the first channel is defined by the wall having a triply periodic minimal surface. The triply periodic minimal surface of the wall must not have any self-intersections such that the wall encloses a number of voids which form the first channel. Thus, the wall having a triply periodic minimal surface forms the first channel.

Note that despite the triply periodic minimal surface having no self-intersections, the internal hollow channel has multiple intersections due to its finite extend in lateral direction of the triply periodic minimal surface.

In one embodiment of the heat exchanger according to the invention, the cooling fluid may flow through the internal hollow channel of the wall having the triply periodic minimal surface thereby building a cooling region. The fluid to be cooled may flow through the first channel which is defined by the wall having the triply periodic minimal surface thereby building a hot region. Similarly, the heat exchanger according to the invention may be populated vice versa, i.e., the internal hollow channel may embody the hot region and the first channel may embody the cooling region.

This design for a heat exchanger has the advantage that the pressure drop in the internal hollow channel is different from the pressure drop of the first channel. With all voids bound by the wall having the triply periodic minimal surface contributing to the first channel, the first channel is fully connected throughout the volume of the heat exchanger. As a result, the pressure drop that the fluid fluid flowing through the first channel experiences is much reduced compared to the pressure drop of the first channel of state-of-the-art heat exchangers in the field of the invention. Additionally, the pressure drop the first fluid experiences in the first channel is lower than (and thus not equal to) the pressure drop the second fluid experiences in the internal hollow channel (second channel) As a result, the heat exchanger according to the invention may be operated for two fluids having different phases, i.e., one gaseous fluid and one liquid fluid.

The pressure drop quantifies by how much the static pressure within a fluid is decreased by the geometry through which it flows. Rough surfaces and/or sharp corners in the flow path will likely increase the pressure drop. The lower the static pressure of the fluid, the lower its capability to do work, e.g., the lower its flow speed or its cooling potential.

Further, the contact area between the two separate fluids is increased significantly such that the heat exchanger is more space efficient. As opposed to known gyroid-based heat exchangers, the contact area between the hot region and the cold region is essentially doubled as the first fluid may be discharged into all voids of the first channel (as defined by the triply periodic minimal surface wall) and the second fluid into the internal hollow channel. In known gyroid-based heat exchanger the two fluids need to be discharged into alternating voids of the gyroid walls. Hence, the contact area of the heat exchanger according to the invention extends over the entire wall having the triply periodic minimal surface.

In general, the design of a heat exchanger according to the invention enables to control the hot region and the cooling region independently from each other, i.e., flexibly control the hot-to-cold ratio, which opens new possibilities for optimizing the heat exchanger more effectively.

Preferably, the internal hollow channel expands along the entire triply periodic minimal surface.

In one embodiment, the internal hollow channel has a cross section that is variable along the shape of the internal hollow channel. In other words, the cross section of the internal hollow channel may vary along the spatial expansion of the internal hollow channel.

This embodiment has the advantage that the pressure of the second fluid may be handled more efficiently. For instance, the cross section of the internal hollow channel may be increased in a subvolume of the heat exchanger, wherein the subvolume comprises an intersection of the internal hollow channel. As a result, the pressure drop of the internal hollow channel near the intersection may be further decreased. It may be advantageous to increase the cross section of the internal hollow channel for all intersections of the internal hollow channel.

In another embodiment, the internal hollow channel has a constant cross section.

This embodiment has the advantage that it may be modeled and manufactured more easily.

Preferably, the wall having the triply periodic minimal surface comprises at least two sections. The at least two sections bound the internal hollow channel. Each of the at least two sections comprises a predefined thickness. The predefined thickness of each of the at least two sections varies along the internal hollow channel and is selected in such a way that each section comprises a predefined heat transfer coefficient.

In some embodiments, the thickness of the at least two sections varies with the cross section of the internal hollow channel. The larger a differential volume of the internal hollow channel, the larger the stress the fluid flowing through this differential volume applies onto the respective section of the wall and thus the thicker the at least two sections of the wall having the triply periodic minimal surface have to be in order to safely guide the fluids, in particular the second fluid. Hence, the thickness of the sections may be increased in particular at intersections of the internal hollow channel.

The heat transfer from the fluid to be cooled to the cooling fluid follows a heat transfer rate. The heat transfer rate is effectively controlled by the temperature difference between the fluid to be cooled and the cooling fluid, the thermal conductivity of the material of the respective section separating the fluid to be cooled and the cooling fluid, the surface area of said wall and its wall thickness. Contributing to the heat transfer coefficient as defined herein are the thermal conductivity of the material of the wall having a triply periodic minimal surface and its wall thickness. Thus, the heat transfer coefficient is a material and geometry specific measure.

Accordingly, an increasing thickness of a section of the wall having the triply periodic minimal surface reduces the heat transfer coefficient. In general, the wall thickness is reduced to a minimum given by pressure constraints. However, in some embodiments it may be advantageous to design the thickness of each of the at least two sections in order to reach specific heat transfer coefficients for each section. Correspondingly, different heat transfer rates between the fluid flowing through the internal hollow channel and the fluid flowing through alternating voids of the first channel may be realized. In other embodiments, the thickness of the sections may vary in sections, in particular to enable wider cross sections of the internal hollow channel at its intersections.

Similarly, the heat transfer coefficient may be influenced by the selection of the material as the thermal conductivity is a material property. With increasing thermal conductivity, the heat transfer coefficient increases in a linear manner. In some embodiments it may be advantageous to select different materials for at least some of the sections. Similarly, it may be advantageous to vary the material of the sections at least in sections. Further, the sections comprising different materials may also vary in their thicknesses.

Preferably, the triply periodic minimal surface is a gyroid surface. In any case, the triply period minimal surface is embedded, i.e., without self-intersections.

The gyroid surface has the advantage over further triply periodic minimal surfaces that it is representable by an implicit function, which facilitates creating a digital model of the heat exchanger for manufacturing.

In one embodiment, the first pipe connection is configured to discharge the first fluid into a first partial volume of the first channel, wherein the first channel comprises a third pipe connection for discharging a third fluid into a second partial volume of the first channel that is disjoint from the first partial volume by the wall having the triply periodic minimal surface.

The pipe connections are connections to discharge a respective fluid into a corresponding channel.

The second channel according to the invention is a single fully connected channel such that in principle one second pipe connection or supply pipe may be sufficient to discharge the second fluid into the second channel. In practice, however, several second pipe connections are used for discharging the second channel more efficiently.

The first channel according to the invention comprises multiple voids defined by the wall extending along the triply periodic minimal surface which are arranged into two disjoined partial volumes, the first partial volume and the second partial volume. In this embodiment, the first fluid may be discharged into both disjoined partial volumes by at least two pipe connections or supply pipes. At least one pipe connection is in fluid communication with the first partial volume of the first channel and at least one further pipe connection is in fluid communication with the second partial volume. Alternatively, the two partial volumes of the first channel may be filled with distinct fluids by a first pipe connection and a third pipe connection.

This embodiment is effectively a three-way heat exchanger, allowing to cool the first fluid and the third fluid using only one cooling fluid, i.e., the second fluid.

In one embodiment, the at least two sections of the wall having the triply periodic minimal surface differ in their thickness such that each section reaches a different predefined heat transfer coefficient.

Accordingly, at least two fluids flowing in each of the first channels and having an identical composition but different incoming temperatures may be cooled by the same cooling fluid flowing through the internal hollow channel to the same outgoing temperature.

Preferably, the gyroid is defined by at least one implicit function. In case the triply periodic minimal surface is not representable by an implicit function, it may be discretized accordingly.

Preferably, the heat exchanger is formed in one piece, in particular by way of an additively manufacturing method. The first channel and the second channel are formed inside the heat exchanger. In other words, the first channel and the second channel are both internal channels of the heat exchanger.

### Short summary of the figures

Specific examples and further embodiments of the invention are presented below with respect to figures which show:
- Fig. 1: a gyroid-based heat exchanger according to prior art;
- Fig. 2: a first cross section of a pipe-in-gyroid heat exchanger according to a first embodiment of the invention;
- Fig. 3: a second cross section of the pipe-in-gyroid heat exchanger of Fig. 2; and
- Fig. 4: a cross section of a further embodiment of the pipe-in-gyroid heat exchanger according to an aspect of the invention.

### Detailed description of the invention

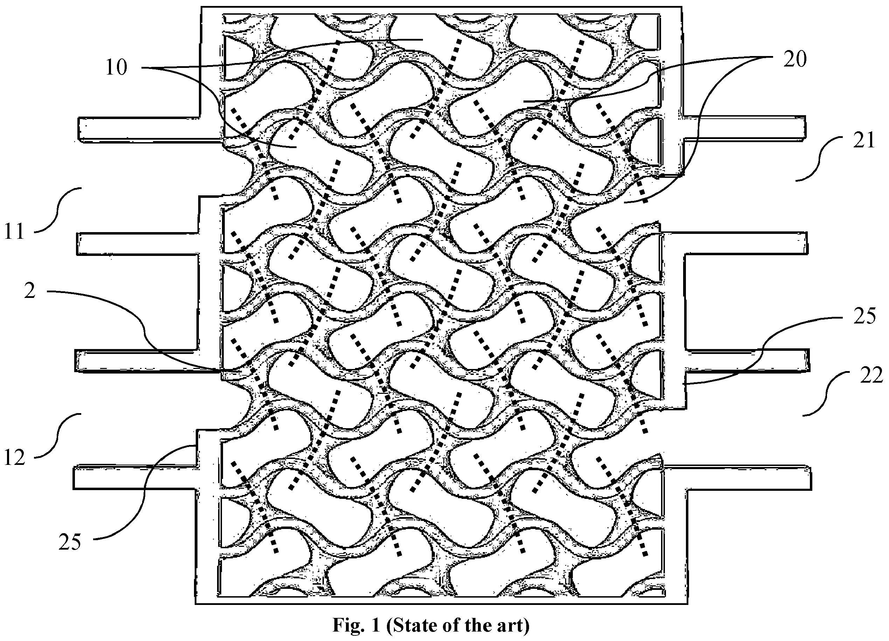

**Fig. 1** shows a gyroid-based heat exchanger according to prior art.

In the gyroid-based heat exchanger of prior art, the wall 2 having a gyroid minimal surface forms both the first channel 10 and the second channel 20. In other words, the first channel 10 and the second channel 20 are formed by alternating voids enclosed by the wall 2 that extends along the gyroid. Since the gyroid minimal surface is an infinitely connected minimal surface, two distinct pipe connections (inlets) 11; 21 are required in order to discharge two separate fluids into the first channel 10 and the second channel 20, respectively.

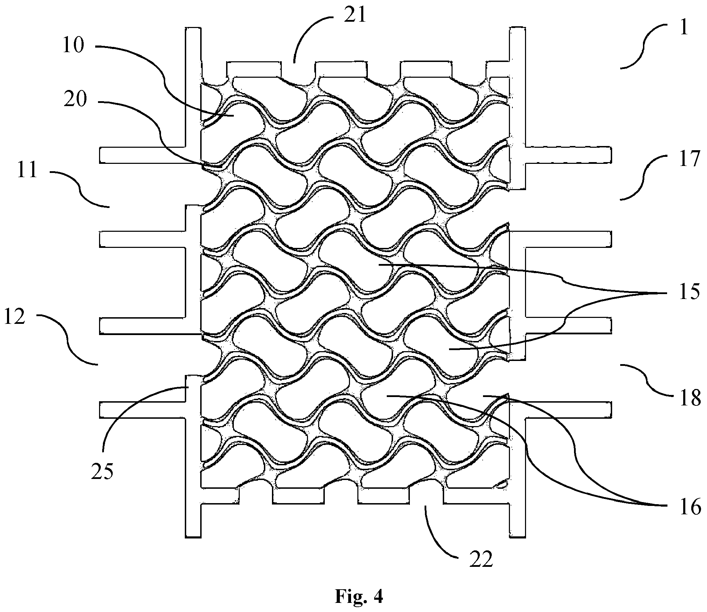

The first channel 10 may embody either the hot region or the cold region, wherein the second channel 20 embodies the respective opposite region, i.e., the cold region or the hot region. Hence, each fluid may flow through every other channel 10; 20 depicted in the cross-sectional view of Fig. 1. In order to facilitate following the first channel 10 and second channel 20 across the cross-sectional view of Fig. 1, the fluid connections between their voids are represented by dotted arcs. In the cross sectional view of Fig. 1, and similarly for Fig. 4, only the voids that are oriented identically in lateral direction of the heat exchanger are connected to each other. Hence, the orientation of a void indicates to which of the two disjoint volumes of first channel 10 and the second channel 20 the void contributes in Fig. 1.

The contact area between the hot region and the cold region is limited by the design of the first pipe connection 11; 12 and the second pipe connection 21; 22. The first pipe connection 11; 12 may be a first inlet 11 for receiving the first fluid and/or a first outlet 12 for outflowing the first fluid. Similarly, the second pipe connection 21; 22 may be a second inlet 21 and/or a second outlet 22. In order to increase the contact area, the inlets 11; 21 need to be engineered such that the first fluid is discharged into every other void and the second fluid is discharged into the voids in between the voids being used for the first fluid. The outlets 12; 22 need to be engineered accordingly. This design is achieved by additional splitting walls 25 forming part of the pipe connections 11; 12; 21; 22, which complicates manufacturing of the pipe connections.

Further, both fluids experience a similar heavy pressure drop as the first channel 10 and the second channel 20 are geometrically essentially identical. In practice, however, the cooling fluid and the fluid to be cooled may have completely different compositions such that one fluid may be much more sensitive to pressure drop than the other.

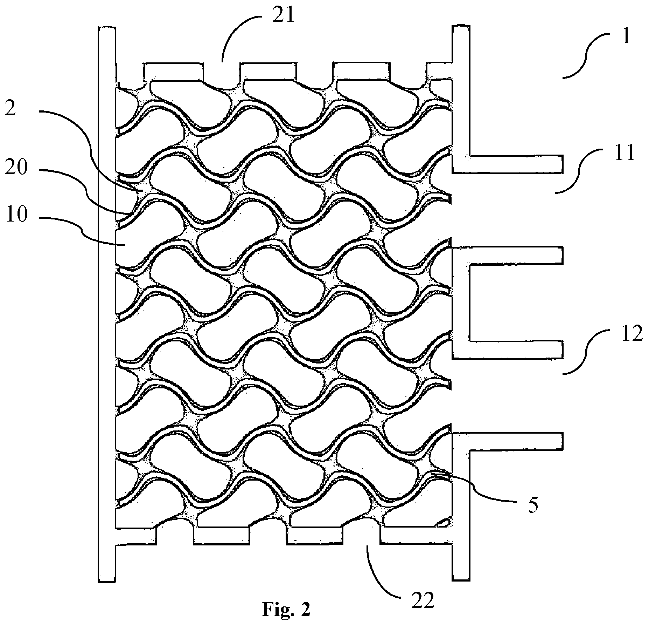

The heat exchanger according to the invention, of which exemplary embodiments are shown in Fig. 2 to 4, reduces the pressure drop in at least one channel in the heat exchanger significantly and simultaneously doubles the contact area between the cooling fluid and the fluid to be cooled.

The heat exchanger 1 according to the invention is also called a pipe-in-gyroid heat exchanger 1, as explained below. The pipe-in-gyroid heat exchanger 1 is formed in one single piece which may be adapted to fit into any given limited space.

At its outside, the pipe-in-gyroid heat exchanger 1 comprises at least one first pipe connection 11; 12 for receiving the first fluid, which preferably is the cooling fluid, discharging the first fluid into the first channel 10, and outflowing the first fluid from the first channel 10. In some embodiments, the first fluid may also be the fluid to be cooled. The first pipe connections 11; 12 may be a first inlet 11 for receiving the first fluid and/or a first outlet 12 for outflowing the first fluid.

Further, the pipe-in-gyroid heat exchanger 1 comprises at least one second pipe connection 21; 22 for receiving the second fluid, which preferably is the fluid to be cooled, and discharging the second fluid into the second channel 20. In some embodiments, the second fluid may also be the cooling fluid. The second pipe connection 21; 22 may be a second inlet 21 and/or a second outlet 22.

The heat exchanger 1 according to the invention may be designed and manufactured based on any triply periodic minimal surface which is embedded, i.e., without any self-intersection. Embedded triply periodic minimal surfaces have the inherent property to divide an unbound space into two disjoint partial volumes of which voids extend in pipelike channels along two distinct crystallographic directions. These surfaces are periodic in each spatial dimension, hence triply periodic. Further, these surfaces are minimal as their areas are locally minimized. The gyroid minimal surface is a popular choice since it is easily representable by an implicit function which may be efficiently evaluated in a digital model of the heat exchanger 1 to be manufactured.

Each partial volume 15; 16 of the first channel 10 comprises at least one flow path for a fluid, wherein the fluid is discharged into the respective partial volume or flow path by way of a respective pipe connection 11; 17. In other words, the inlet 11 of the first channel is in fluid connection with the first partial volume 15 of the first channel. The further inlet 17 of the first channel is in fluid connection with the second partial volume 16 of the first channel 10. Hence, two distinct fluids may be discharged into the first channel while being separated into two disconnected partial volume 15; 16.

**Fig. 2** shows a first cross section of a pipe-in-gyroid heat exchanger according to an embodiment of the invention.

The first cross section of the pipe-in-gyroid heat exchanger 1 provides a view on a fraction of the wall 2 having a gyroid minimal surface which forms the first channel 10. In this embodiment of the pipe-in-gyroid heat exchanger 1 the first channel 10 comprises a single, contiguous volume, i.e., every void enclosed by the gyroid wall 2 forms part of the first channel 10.

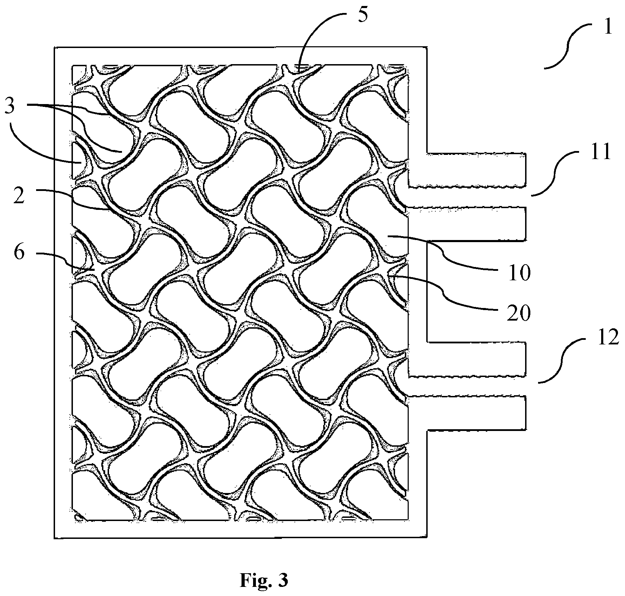

With respect to the gyroid-based heat exchanger of prior art (Fig. 1), the wall 2 having the gyroid minimal surface, also called gyroid wall 2 in short, in the pipe-in-heat exchanger 1 appears to have an increased thickness in the view of Fig. 2. However, the gyroid wall 2 of the pipe-in-gyroid heat exchanger 1 comprises an internal hollow channel 5 which extends along the entire gyroid wall 2, which can be seen even better in a second cross section (Fig. 3) which is parallel to the first cross section. The internal hollow channel 5 forms the second channel 20 in the pipe-in-gyroid heat exchanger 1.

In other words, the internal hollow channel 5 is a pipe in the gyroid wall 2, which explains the name "pipe-in-gyroid heat exchanger".

One advantage of the pipe-in-gyroid heat exchanger with respect to its state-of-the-art companion is that the first fluid may be discharged into every void of the first channel 10 depicted in Fig. 2, not only into every other channel as in Fig. 1 Hence, the first channel 10 of the pipe-in-gyroid heat exchanger 1 essentially comprises twice as much volume and a significantly larger contact area to the second channel 20.

The second channel 20 comprises several second pipe connections 21; 22 for receiving the second fluid and/or outflowing the second fluid. In Fig. 2, the second inlets 21 of the second channel 20 formed by the internal hollow channel 5 are arranged at the top section of the heat exchanger 1. The second outlets 22 of the second channel 20 are arranged at the bottom section of the heat exchanger of Fig. 2. The heat exchanger of Fig. 2 further comprises first pipe connections 11; 12 of the first channel 10 for receiving and/or outflowing the first fluid. The first inlet 11 is arranged above the first outlet 12 of the first channel such that the first fluid may flow just by the earth's gravity from the first inlet 11 through the first channel 10 to its first outlet 12.

**Fig. 3** shows a second cross section of the heat exchanger of Fig. 2.

The second cross section is parallel to the first cross section and is selected such that it provides a cross-sectional view onto the fully connected internal hollow channel 5 in the crosslike sections of the gyroid wall 2 in the pipe-in-gyroid heat exchanger 1. As the second channel 5 extends along the entire gyroid wall 2, there is exactly one fully connected second channel 5 in the pipe-in-gyroid heat exchanger 1, which comprises intersections 6 within the crosslike sections of the gyroid wall 2

In the cross section of Fig. 3, the pipe connections 21; 22 of the second channel 20 are not visible. In embodiment of Figs. 2 and 3, the pipe connections 11; 12 of the first channel 10 have an essentially circular shape. Hence, the diameter of the inlet 11 and outlet 12 of the first channel in the cross section of Fig. 3 is smaller than the respective diameter in the cross section of Fig. 2.

Despite the smaller cross section of the second channel 20 in comparison to the cross section of the first channel 10, its pressure drop is decreased with respect to the regions of the state-of-the-art gyroid-based heat exchanger. This reduction results from inherent properties of the triply periodic minimal surface such as its constant mean curvature and the large volume extending over the entire wall 2 having the triply periodic minimal structure.

Further, the pipe-in-gyroid heat exchanger 1 does not require complicated engineering of pipe connections 11; 12 to discharge the two partial volumes of the first channel 10 with separate fluids, which also facilitates designing and manufacturing of the heat exchanger 1.

Due to their different geometries, the pressure drop differs between the first channel 10 and the second channel 20 of the pipe-in-gyroid heat exchanger 1. This characteristic of the pipe-in-gyroid heat exchanger 1 enables to treat the two fluids flowing through the pipe-in-gyroid heat exchanger 1 differently. For instance, the second channel 10 may transport a gas, which is not achievable in state-of-the-art gyroid-based heat exchangers due to their large pressure drop. In case the second fluid is a process fluid for a chemical reaction, it may by cooled or heated by flowing through the second channel 20 without experiencing a large pressure drop as known from the gyroid heat exchangers of prior art.

The cross section of the gyroid wall 2 in the embodiment of Figs. 2 and 3 comprises two sections 3 which bound the internal hollow channel. Each section 3 comprises a predefined thickness, which may be equal or vary along the gyroid wall 2. The predefined thickness may be engineered in such a way that the respective section 3 comprises a predefined heat transfer coefficient. The heat transferred per second through an area of the section 3 scales proportionally with its thickness. Further, the minimal thickness of each section 3is constrained by the pressure of the fluids in the heat exchanger 1. Hence, the thickness of the sections 3 of the gyroid wall 2 is a crucial parameter in the design of the pipe-in-gyroid heat exchanger 1.

The design of the pipe-in-gyroid heat exchanger 1 according to the invention allows a flexible control over the cool-to-hot ratio as the thickness of each of the sections 3 may be easily varied. In one embodiment, the thickness of the sections 3 of the gyroid wall 2 may differ in sections, in particular the thickness may be increased near the crosslike intersections 6 of the internal hollow channel 5. The stress applied onto the gyroid wall due to pressure of the fluids, in particular the second fluid flowing in the second channel 20 represented by the internal hollow channel 5 tends to be larger at these intersections. Increasing the thickness locally at these intersections 6 therefore stabilizes the internal structure of the heat exchanger without losing much of its heat transfer capacity.

Apart from the thickness of the sections 3 also its material influences the heat transfer between the first fluid and the second fluid. Each material is characterized by its thermal conductivity which is large for metals such as aluminum, copper, or gold and low for insulators such as glass or concrete.

In one embodiment, the material of the at least two sections may differ between sections. This feature has the advantage that a loss of the heat transfer rate in downstream direction of the heat exchanger 1 may be compensated at least partially. Further, the stability or robustness of sections surrounding the crosslike intersections 6 of the internal hollow channel 5 may be increased by manufacturing these sections using a material having a larger strength than the default material used for other sections of the wall 2 having the triply periodic minimal surface.

**Fig. 4** shows a cross section of a further embodiment of the pipe-in-gyroid heat exchanger according to an aspect of the invention

In the embodiment of Fig. 4, the pipe-in-gyroid heat exchanger comprises at least one further or third pipe connection 17; 18, such that the two disjoint partial volumes 15; 16 of the first channel may be occupied with distinct fluids. Consequently, the heat exchanger 1 may intake three fluids simultaneously, i.e., cool two fluids using only one cooling fluid. This embodiment of the heat exchanger 1 is also called three-way pipe-in-gyroid heat exchanger.

In Fig. 4, the first inlet 11 and first outlet 12 being in fluid connection to the first partial volume 15 of the first channel 10 are arranged on one side of the heat exchanger 1. The third pipe connections 17; 18, i.e. the third inlet 17 and third outlet 18, being in fluid connection to the second partial volume 16 of the first channel 10 are arranged on an opposite side of the heat exchanger 1. Both the first pipe connections 11; 12 and the third pipe connections 17; 18 of this embodiment comprise an additional splitting wall 25. Similar to the embodiment shown in Fig. 2, the second pipe connections 21; 22 being in fluid connection to the second channel 20 are arranged at the top and bottom sides of the heat exchanger for receiving and outflowing of the second fluid, respectively.

In the three-way pipe-in-gyroid heat exchanger, the sections having different thicknesses in the cross section of the second channel 5 have the advantage that the heat transfer coefficient may differ between the two partial volumes 15; 16 of the first channel 10. In other words, a first section separating the second channel 5 from the first partial volume 15 or flow path of the first channel 10 may differ in its thickness from second section separating the second channel 5 from the second partial volume 16 or flow path of the first channel 10 on another side (not shown). This embodiment of the three-way pipe-in-gyroid heat exchanger may be also used, e.g., to cool the first fluid from two different temperatures to a similar temperature using the second fluid, i.e., only one cooling fluid.

### List of reference numerals:

- 1: heat exchanger
- 2: wall having a triply periodic minimal surface
- 3: at least two sections of the wall 2
- 5: internal hollow channel
- 6: intersection of the internal hollow channel
- 10: first channel
- 11: first inlet
- 12: first outlet
- 15: first partial volume of the first channel 10
- 16: second partial volume of the first channel 10
- 17: third inlet
- 18: third outlet
- 20: second channel
- 21: second inlet
- 22: second outlet
- 25: additional splitting wall

## Claims

1. Heat exchanger, comprising a first channel and a second channel, wherein the first channel comprises a first pipe connection for receiving a first fluid, wherein the first channel is limited by a wall having a triply periodic minimal surface,
**characterized in that**
the wall having the triply periodic minimal surface comprises an internal hollow channel, wherein the internal hollow channel comprises a second pipe connection for receiving a second fluid, wherein the internal hollow channel is the second channel, such that the heat exchanger is adapted to exchange heat via the wall having the triply periodic minimal surface between the first fluid in the first channel and the second fluid in the second channel.

2. The heat exchanger of claim 1, wherein the internal hollow channel expands along the entire triply periodic minimal surface.

3. The heat exchanger of claim 1, wherein the internal hollow channel has a cross section that is variable along the shape of the internal hollow channel.

4. The heat exchanger of claim 1, wherein the internal hollow channel has a constant cross-section.

5. The heat exchanger of claim 1, wherein the wall having the triply periodic minimal surface comprises at least two sections, wherein the at least two sections bound the internal hollow channel, and wherein each of the at least two sections comprise a predefined thickness, wherein the predefined thickness of each of the at least two sections varies along the internal hollow channel and is selected in such a way that each section comprises a predefined heat transfer coefficient.

6. The heat exchanger of claim 1, wherein the triply periodic minimal surface is a gyroid.

7. The heat exchanger of claim 1, wherein the first pipe connection is configured to discharge the first fluid into a first partial volume of the first channel, wherein the first channel comprises a third pipe connection for discharging a third fluid into a second partial volume of the first channel that is disjoint from the first partial volume by the wall having the triply periodic minimal surface.

8. The heat exchanger of claim 5 or claim 7, wherein the at least two sections of the wall having the triply periodic surface differ in their thickness such that each section reaches a different predefined heat transfer coefficient.

9. The heat exchanger of claim 6, wherein the gyroid is defined by an implicit function.

10. The heat exchanger of claim 1, wherein the heat exchanger is formed in one piece, in particular by way of an additively manufacturing method, wherein the first channel and the second channel are formed inside the heat exchanger.
